(19) Europäisches Patentamt
European Patent Office
Office européen des brevets

(11) Veröffentlichungsnummer: **0 115 828**
**A1**

(12) **EUROPÄISCHE PATENTANMELDUNG**

(21) Anmeldenummer: **84100853.5**

(22) Anmeldetag: **27.01.84**

(51) Int. Cl.³: **C 07 F 9/18**, C 07 F 9/40, A 01 N 57/14, A 01 N 57/22

(30) Priorität: **08.02.83 DE 3304203**

(43) Veröffentlichungstag der Anmeldung: **15.08.84 Patentblatt 84/33**

(84) Benannte Vertragsstaaten: **AT BE CH DE FR GB IT LI NL**

(71) Anmelder: **BAYER AG, Konzernverwaltung RP Patentabteilung, D-5090 Leverkusen 1 Bayerwerk (DE)**

(72) Erfinder: **Krüger, Bernd-Wieland, Dr., Sillerstrasse 49, D-5600 Wuppertal 11 (DE)**
Erfinder: **Kysela, Ernst, Dr., Virchowstrasse 14, D-5060 Bergisch Gladbach 1 (DE)**
Erfinder: **Stetter, Jörg, Dr., Gellertweg 4, D-5600 Wuppertal 1 (DE)**
Erfinder: **Becker, Benedikt, Dr., Metzkausenerstrasse 14, D-4020 Mettmann (DE)**
Erfinder: **Homeyer, Bernhard, Dr., Obere Strasse 28, D-5090 Leverkusen 3 (DE)**
Erfinder: **Stendel, Wilhelm, Dr., In den Birken 55, D-5600 Wuppertal 1 (DE)**

(54) **Substituierte Oximether.**

(57) Die Erfindung betrifft neue substituierte Oximether der allgemeinen Formel (I)

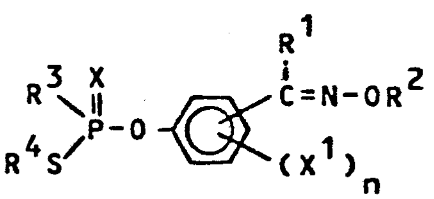

(I)

in welcher

X für Sauerstoff oder Schwefel steht,

$X^1$ für Halogen, Nitro, Cyano, Alkyl, Alkoxy, Alkylthio, Halogenalkyl, Halogenalkoxy und/oder Halogenalkylthio steht,

$R^1$ für Wasserstoff oder Alkyl steht,

$R^2$ für Alkyl steht,

$R^3$ für Alkyl, Alkoxy oder Aryl steht,

$R^4$ für Alkyl steht und

n für 0, 1 oder 2 steht.

Die neuen Verbindungen können als Schädlingsbekämpfungsmittel verwendet werden.

EP 0 115 828 A1

0115828

BAYER AKTIENGESELLSCHAFT
Konzernverwaltung RP
Patentabteilung

5090 Leverkusen, Bayerwerk

S/bo
Ia

# Substituierte Oximether

Die Erfindung betrifft neue substituierte Oximether, ein Verfahren zu ihrer Herstellung und ihre Verwendung als Schädlingsbekämpfungsmittel, vorzugsweise zur Bekämpfung tierischer Schädlinge, insbesondere als Arthropodizide (wie Insektizide und Akarizide) und Nematizide.

Es ist bekannt, daß bestimmte Phosphorsäureester wie z.B. O,O-Diethyl-O-(4-O-methyl-benzaldoxim)-thiono-phosphorsäureester, O,O-Diethyl-O-(4-O-methyl-acetophenonoxim)-thiono-phosphorsäureester und O-(2,4-Dichlorphenyl)-O-ethyl-S-n-propyl-dithiophosphorsäureester gute insektizide Eigenschaften aufweisen (vergleiche DE 19 36 750 und 21 63 391).

Die arthropodizide und nematizide Wirkung dieser bekannten Verbindungen ist jedoch unter bestimmten Umständen, insbesondere bei niedrigen Wirkstoffkonzentrationen und Aufwandmengen, nicht immer voll zufriedenstellend.

Es wurden nun neue substituierte Oximether der allgemeinen Formel (I)

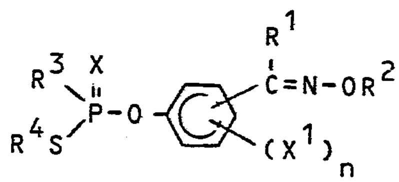 (I)

gefunden,

in welcher

X für Sauerstoff oder Schwefel steht,

$X^1$ für Halogen, Nitro, Cyano, Alkyl, Alkoxy, Alkylthio, Halogenalkyl, Halogenalkoxy und/oder Halogenalkylthio steht,

$R^1$ für Wasserstoff oder Alkyl steht,

$R^2$ für Alkyl steht,

$R^3$ für Alkyl, Alkoxy oder Aryl steht,

$R^4$ für Alkyl steht und

n für 0, 1 oder 2 steht.

Man erhält die neuen substituierten Oximether der allgemeinen Formel (I), wenn man Phenole der allgemeinen Formel (II)

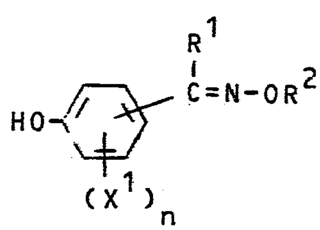 (II)

in welcher

$X^1$, $R^1$, $R^2$ und n die oben angegebene Bedeutung haben,

oder deren Alkalimetall-, Erdalkalimetall- oder Ammoniumsalze mit Halogeniden der allgemeinen Formel (III)

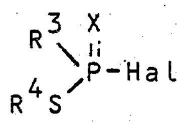

(III)

in welcher

$R^3$, $R^4$ und X die oben angegebene Bedeutung haben, und

Hal für Halogen (vorzugsweise Chlor oder Brom) steht,

gegebenenfalls in Gegenwart eines Säureakzeptors und gegebenenfalls unter Verwendung eines Verdünnungsmittels umsetzt.

Die neuen substituierten Oximether der Formel (I) zeichnen sich durch hohe Wirksamkeit als Schädlingsbekämpfungsmittel, insbesondere durch ihre hervorragende arthropodizide (wie insektizide und akarizide) und nematizide Wirkung aus.

Die Alkylreste $X^1$, $R^1$, $R^2$, $R^3$ und $R^4$ sowie die Alkylteile der Alkoxy-, Alkylthio-, Halogenalkyl-, Halogenalkoxy- und Halogenalkylthio-Reste $X^1$ und $R^3$ können geradkettig oder verzweigt sein und enthalten vorzugsweise jeweils 1 bis 8, insbesondere 1 bis 6 und besonders bevorzugt 1 bis 4 Kohlenstoffatome. Halogenalkyl, bzw. die Halogenalkylteile der genannten Reste enthalten vorzugsweise 1 bis 5, insbesondere 1 bis 3 gleiche oder verschiedene Halogenatome (Fluor, Chlor, Brom oder Jod, vorzugsweise

Fluor und/oder Chlor). Beispielhaft seien für die genannten Gruppen die folgenden Reste aufgeführt: Methyl, Ethyl, n-Propyl, i-Propyl, n-Butyl, i-Butyl, sec-Butyl, tert.-Butyl, Methoxy, Ethoxy, n-Propoxy, i-Propoxy, n-Butoxy, i-Butoxy, sec-Butoxy, tert.-Butoxy, Methylthio, Ethylthio, n-Propylthio, i-Propylthio, n-Butylthio, i-Butylthio, sec-Butylthio, tert.-Butylthio, Trifluormethyl, Trichlormethyl, Dichlorfluormethyl, Chlordifluormethyl, Difluormethyl, Trifluorethyl, Trichlorethyl, Dichlorfluorethyl, Chlordifluorethyl, Difluorethyl, Trifluormethoxy, Trichlormethoxy, Dichlorfluormethoxy, Chlordifluormethoxy, Difluormethoxy, Trifluorethoxy, Trichlorethoxy, Dichlorfluorethoxy, Chlordifluorethoxy, Difluorethoxy, Trifluormethylthio, Trichlormethylthio, Dichlorfluormethylthio, Chlordifluormethylthio, Difluormethylthio, Trifluorethylthio, Trichlorethylthio, Dichlorfluorethylthio, Chlordifluorethylthio und Difluorethylthio.

Als Aryl $R^3$ steht Aryl mit vorzugsweise 6 bis 10 Kohlenstoffatomen im Arylteil, Beispielhaft seien Phenyl oder Naphthyl, insbesondere Phenyl genannt, wobei diese Reste durch die in der Phosphorchemie üblichen Reste substituiert sein können.

Wenn n für 1 oder 2 steht, werden die 2- und/oder 4-Stellungen des Phenylringes (P-O- = 1-Stellung) bevorzugt. Die $-R^1C{=}N{-}OR^2$ -Gruppe befindet sich vorzugsweise in 2-, 3- oder 4-Stellung des Phenylringes.

Halogen bedeutet (wo nicht anders erläutert) Fluor, Chlor, Brom und Iod, vorzugsweise Chlor und Brom.

Bevorzugt sind die Verbindungen der allgemeinen Formel (I), in welcher

$R^1$ für Wasserstoff oder Alkyl mit 1 bis 4 Kohlenstoffatomen steht,

$R^2$ für Alkyl mit 1 bis 4 Kohlenstoffatomen steht,

$R^3$ für Alkyl mit 1 bis 4 Kohlenstoffatomen, Alkoxy mit 1 bis 4 Kohlenstoffatomen oder Phenyl steht,

$R^4$ für Alkyl mit 1 bis 6 Kohlenstoffatomen (insbesondere mit 1 bis 4 Kohlenstoffatomen) steht,

X für Sauerstoff oder Schwefel steht,

$X^1$ gleich oder verschieden sein kann und für Halogen, Cyano, Nitro, Alkyl mit 1 bis 4 Kohlenstoffatomen, Alkoxy mit 1 bis 4 Kohlenstoffatomen, Alkylthio mit 1 bis 4 Kohlenstoffatomen, Halogenalkyl mit 1 bis 4 Kohlenstoffatomen und 1 bis 5 Halogenatomen oder für die Reste aus der Reihe Halogenalkoxy und Halogenalkylthio mit 1 bis 4 Kohlenstoffatomen und 1 bis 5 Halogenatomen (insbesondere Trifluormethyl, Trichlormethyl, Dichlorfluormethyl, Chlordifluormethyl, Difluormethyl, Trifluorethyl, Trichlorethyl, Dichlorfluorethyl, Chlordifluorethyl, Difluorethyl, Trifluormethoxy, Trichlormethoxy, Dichlorfluormethoxy, Chlordifluormethoxy, Difluormethoxy, Trifluorethoxy, Trichlorethoxy, Dichlorfluorethoxy, Chlordifluorethoxy, Difluorethoxy, Trifluormethylthio, Trichlormethylthio, Dichlorfluormethylthio, Chlordifluormethylthio, Difluormethylthio, Trifluorethylthio, Trichlorethylthio, Dichlorfluorethylthio, Chlordifluorethylthio und Difluorethylthio) steht und

n für 0, 1 oder 2, vorzugsweise 0 oder 1, steht.

Besonders bevorzugt sind die Verbindungen der allgemeinen Formel (I), in welcher

$R^1$ für Wasserstoff, Methyl oder Ethyl steht,

$R^2$ für Methyl oder Ethyl steht,

$R^3$ für Methyl, Ethyl, Methoxy oder Ethoxy steht,

$R^4$ für n-Propyl, i-Propyl, n-Butyl, i-Butyl oder sec-Butyl steht,

X für Sauerstoff oder Schwefel steht,

$X^1$ gleich oder verschieden sein kann und für Fluor, Chlor, Brom, Nitro, Methyl, Ethyl, Methoxy, Ethoxy, Trifluormethyl, Trifluormethoxy oder Trifluormethylthio steht und

n für 0, 1 oder 2 steht.

Ganz besonders bevorzugt sind die Verbindungen der allgemeinen Formel (I), in welcher

$R^1$ für Wasserstoff oder Methyl steht,

$R^2$ für Methyl steht,

$R^3$ für Ethyl oder Ethoxy steht,

$R^4$ für n-Propyl oder sec.-Butyl steht,

X für Sauerstoff oder Schwefel steht,

$X^1$ für Fluor, Brom, Chlor, Methoxy, Trifluormethoxy und/oder Trifluormethylthio steht und

n für 0, 1 oder 2 steht.

Verwendet man für das erfindungsgemäße Verfahren als Ausgangsstoffe 4-Methoximinophenol oder das entsprechende Natriumsalz und O,S-Diethyl-thiophosphorsäureesterchlorid, so können die entsprechenden Verfahrensschritte durch folgende Formelschemata skizziert werden :

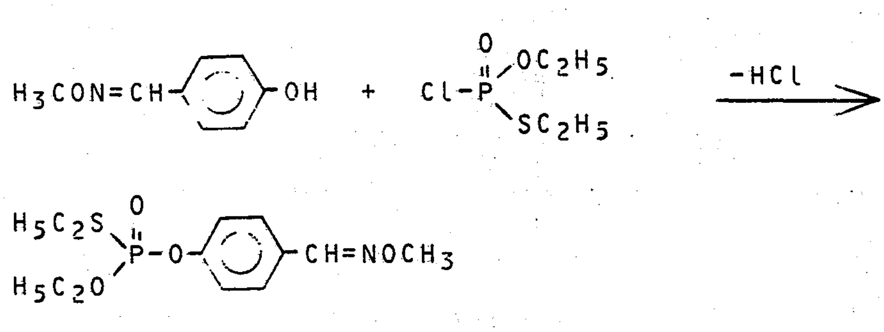


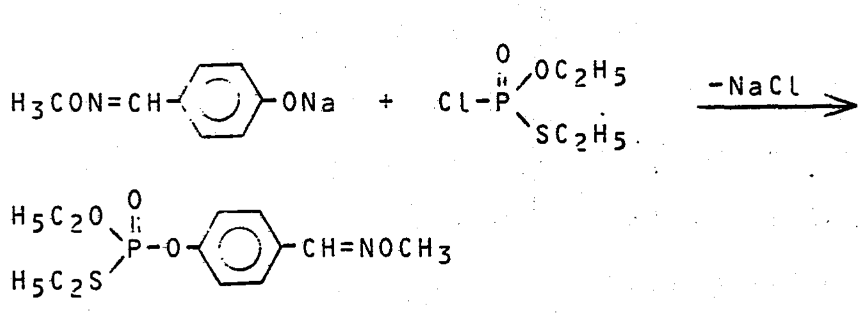


Die beim erfindungsgemäßen Verfahren als Ausgangsstoffe zu verwendenden Phenole bzw. deren Salze sind durch die Formel (II) definiert. In dieser Formel stehen $R^1$, $R^2$, $X^1$ und n für diejenigen Reste, welche oben bei der Definition in Formel (I) angegeben sind.

Die Alkali- und Erdalkalimetallionen stehen vorzugsweise für Natrium-, Kalium-, Calcium- und Ammoniumionen.

Als Beispiele für die Ausgangsstoffe der Formel (II) seien genannt :

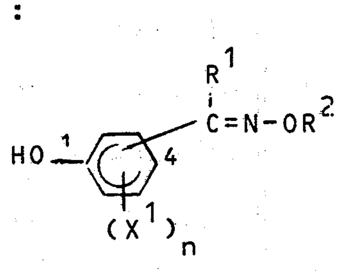

(II)

Tabelle 1 :

| $-\overset{R^1}{\overset{\vert}{C}}=N-OR^2$ | $(X^1)_n$ | $-\overset{R^1}{\overset{\vert}{C}}=N-OR^2$ | $(X^1)_n$ |
|---|---|---|---|
| 2-$CH=NOCH_3$ | --- | 2-$C(CH_3)=NOCH_3$ | 4-$CH_3$ |
| 2-$CH=NOCH_3$ | 4-Cl | 2-$C(CH_3)=NOCH_3$ | 4-$OCH_3$ |
| 2-$CH=NOCH_3$ | 4,6-$Cl_2$ | 2-$C(CH_3)=NOCH_3$ | 4-$OCF_3$ |
| 2-$CH=NOCH_3$ | 4-F | 2-$C(CH_3)=NOCH_3$ | 4-$SCH_3$ |
| 3-$C(CH_3)=NOCH_3$ | 4-$CH_3$ | 2-$C(CH_3)=NOCH_3$ | 4-$SCF_3$ |
| 3-$C(CH_3)=NOCH_3$ | 4-$OCH_3$ | 3-$CH=NOCH_3$ | --- |
| 3-$C(CH_3)=NOCH_3$ | 4-$OCF_3$ | 3-$CH=NOCH_3$ | 4-Cl |
| 3-$C(CH_3)=NOCH_3$ | 4-$SCH_3$ | 3-$CH=NOCH_3$ | 2,5-$Cl_2$ |
| 3-$C(CH_3)=NOCH_3$ | 4-$SCF_3$ | 3-$CH=NOCH_3$ | 4-F |
| 2-$CH=NOCH_3$ | 4-Br | 3-$CH=NOCH_3$ | 4-Br |
| 2-$CH=NOCH_3$ | 4-$CH_3$ | 3-$CH=NOCH_3$ | 4-$CH_3$ |
| 2-$CH=NOCH_3$ | 4-$OCH_3$ | 3-$CH=NOCH_3$ | 4-$OCH_3$ |
| 2-$CH=NOCH_3$ | 4-$OCF_3$ | 3-$CH=NOCH_3$ | 4-$OCF_3$ |
| 2-$CH=NOCH_3$ | 4-$SCH_3$ | 3-$CH=NOCH_3$ | 4-$SCH_3$ |
| 2-$CH=NOCH_3$ | 4-$SCF_3$ | 3-$CH=NOCH_3$ | 4-$SCF_3$ |
| 2-$C(CH_3)=NOCH_3$ | --- | 3-$C(CH_3)=NOCH_3$ | 4-Cl |
| 2-$C(CH_3)=NOCH_3$ | 4-Cl | 3-$C(CH_3)=NOCH_3$ | 2,5-$Cl_2$ |
| 2-$C(CH_3)=NOCH_3$ | 4,6-$Cl_2$ | 3-$C(CH_3)=NOCH_3$ | 4-F |
| 2-$C(CH_3)=NOCH_3$ | 4-F | 3-$C(CH_3)=NOCH_3$ | 4-Br |
| 2-$C(CH_3)=NOCH_3$ | 4-Br | 3-$C(CH_3)=NOCH_3$ | --- |

Tabelle 1 : (Fortsetzung)

| $R^1$ $-\overset{\vert}{C}=N-OR^2$ | $(X^1)_n$ |
|---|---|
| $4-CH=NOCH_3$ | --- |
| $4-CH=NOCH_3$ | 2-Cl |
| $4-CH=NOCH_3$ | $2,6-Cl_2$ |
| $4-CH=NOCH_3$ | 2-F |
| $4-CH=NOCH_3$ | 2-Br |
| $4-CH=NOCH_3$ | $2-CH_3$ |
| $4-CH=NOCH_3$ | $2-OCH_3$ |
| $4-CH=NOCH_3$ | $2-OCF_3$ |
| $4-CH=NOCH_3$ | $2-SCH_3$ |
| $4-CH=NOCH_3$ | $2-SCF_3$ |
| $4-C(CH_3)=NOCH_3$ | --- |
| $4-C(CH_3)=NOCH_3$ | 2-Cl |
| $4-C(CH_3)=NOCH_3$ | $2,6-Cl_2$ |
| $4-C(CH_3)=NOCH_3$ | 2-F |
| $4-C(CH_3)=NOCH_3$ | 2-Br |
| $4-C(CH_3)=NOCH_3$ | $2-CH_3$ |
| $4-C(CH_3)=NOCH_3$ | $2-OCH_3$ |
| $4-C(CH_3)=NOCH_3$ | $2-OCF_3$ |
| $4-C(CH_3)=NOCH_3$ | $2-SCH_3$ |
| $4-C(CH_3)=NOCH_3$ | $2-SCF_3$ |

Tabelle 1 : (Fortsetzung)

| $-C(R^1)=N-OR^2$ | $(X^1)_n$ |
| --- | --- |
| $4-CH=NOCH_3$ | 3-Cl |
| $4-CH=NOCH_3$ | $3,5-Cl_2$ |
| $4-CH=NOCH_3$ | 3-F |
| $4-CH=NOCH_3$ | 3-Br |
| $4-CH=NOCH_3$ | $3-CH_3$ |
| $4-CH=NOCH_3$ | $3-OCH_3$ |
| $4-CH=NOCH_3$ | $3-OCF_3$ |
| $4-CH=NOCH_3$ | $3-SCH_3$ |
| $4-CH=NOCH_3$ | $3-SCF_3$ |
| $4-C(CH_3)=NOCH_3$ | 3-Cl |
| $4-C(CH_3)=NOCH_3$ | $3,5-Cl_2$ |
| $4-C(CH_3)=NOCH_3$ | 3-F |
| $4-C(CH_3)=NOCH_3$ | 3-Br |
| $4-C(CH_3)=NOCH_3$ | $3-CH_3$ |
| $4-C(CH_3)=NOCH_3$ | $3-OCH_3$ |
| $4-C(CH_3)=NOCH_3$ | $3-OCF_3$ |
| $4-C(CH_3)=NOCH_3$ | $3-SCH_3$ |
| $4-C(CH_3)=NOCH_3$ | $3-SCF_3$ |

Die Verbindungen der Formel (II) sind teilweise bekannt (vgl. z.B. EP 12 158). Sie können nach bekannten und allgemein üblichen Verfahren und Methoden hergestellt werden, z.B. aus den entsprechenden Aldehyden und Ketonen mit Alkoxylaminen.

Verbindungen der Formel (II) erhält man beispielsweise aus den entsprechenden Aldehyden und Ketonen und Hydroxylamino-Derivaten bzw. deren Salzen in Gegenwart von Verdünnungsmitteln wie z.B. Ethanol und in Gegenwart von Basen wie z.B. Triethylamin, bei Temperaturen zwischen 0°C und 80°C, vorzugsweise zwischen 20°C und 60°C.

Hierzu eingesetzte Aldehyde, in welchen $R^1$ für Wasserstoff und $X^1$ für Trifluormethoxy oder Trifluormethylthio stehen, können beispielsweise auch dadurch erhalten werden, daß man die entsprechenden Phenole in HF formyliert. Zur Einführung der Formyl(Aldehyd)-Gruppe werden hierbei z.B. 1 Mol Trifluormethoxy- oder Trifluormethylthiophenol und etwa 1 Mol Urotropin bei etwa -5°C mit etwa 500 ml HF versetzt und etwa 5 Stunden in einer geschlossenen Apparatur auf etwa 80°C erwärmt. Das Reaktionsgemisch wird in üblicher Weise aufgearbeitet und entstandene isomere Trifluormethoxy- bzw. Trifluormethylthio-hydroxy-benzaldehyde durch Destillation getrennt und gereinigt.

Die ebenfalls als Ausgangsstoffe für die Herstellung der neuen Verbindungen der Formel (I) einzusetzenden Halogenide sind durch die Formel (III) definiert. In dieser Formel stehen $R^3$, $R^4$ und X für diejenigen Reste, welche oben bei der Definition in Formel (I) angegeben sind.

Als Beispiele für die Ausgangsstoffe der Formel (III) seien genannt :

Methylthio-methyl-, Methylthio-ethyl-, Methylthio-n-propyl-, Methylthio-i-propyl-, Methylthio-n-butyl-, Methylthio-sec.butyl-, Methylthio-i-butyl-, Ethylthio-methyl-, Ethylthio-ethyl-, Ethylthio-n-propyl-, Ethylthio-i-propyl-, Ethyl-n-butyl-, Ethylthio-i-butyl-, n-Propylthio-methyl-, n-Propylthio-ethyl-, n-Propylthio-n-propyl-, n-Propylthio-i-propyl-, n-Propylthio-n-butyl-, n-Propylthio-i-butyl-, i-Propylthio-methyl-, i-Propylthio-ethyl-, i-Propylthio-n-propyl-, i-Propylthio-i-propyl-, i-Propylthio-n-butyl-, i-Propylthio-i-butyl-, n-Butylthio-methyl-, n-Butylthio-ethyl-, n-Butylthio-n-propyl-, n-Butylthio-i-propyl-, n-Butylthio-n-butyl-, n-Butylthio-i-butyl-, i-Butylthio-methyl-, i-Butylthio-ethyl-, i-Butylthio-n-propyl-, i-Butylthio-i-propyl-, i-Butylthio-n-butyl-, i-Butylthio-i-butyl-, sec.Butylthio-methyl-, sec-Butylthio-ethyl-, sec-Butylthio-n-propyl-, sec-Butylthio-i-propyl-, sec.Butylthio-n-butyl-, sec.Butylthio-i-butyl-, tert.Butylthio-methyl-, tert.Butylthio-ethyl-, tert.Butylthio-n-propyl-, tert.Butylthio-i-propyl-, tert.Butylthio-n-butyl-, tert.Butylthio-i-butyl-(thiono)phosphonsäureester-chlorid bzw. bromid;

Methoxy-methylthio-, Methoxy-ethylthio-, Methoxy-n-propylthio-, Methoxy-i-propylthio-, Methoxy-n-butylthio-, Methoxy-i-butylthio-, Ethoxy-methylthio-, Ethoxy-ethylthio-, Ethoxy-n-propylthio-, Ethoxy-i-propylthio-, Ethoxy-n-butylthio-, Ethoxy-i-butylthio-, Ethoxy-sec.-butylthio-, n-Propoxy-methylthio-, n-Propoxy-ethylthio-, n-Propoxy-n-propylthio-, n-Propoxy-i-propylthio-, n-Propoxy-n-butylthio-, n-Propoxy-i-butylthio-, i-Propoxy-methylthio-, i-Propoxy-ethylthio-, i-Propoxy-n-propylthio-, i-Propoxy-i-propylthio-, i-Propoxy-n-butylthio-, i-Propoxy-i-butylthio-, n-Butoxy-methylthio-, n-Butoxy-ethylthio-, n-Butoxy-n-propylthio-, n-Butoxy-i-propylthio-, n-Butoxy-n-butylthio-, n-Butoxy-i-butylthio-,

i-Butoxy-methylthio-, i-Butoxy-ethylthio-, i-Butoxy-n-propylthio-, i-Butoxy-i-propylthio, i-Butoxy-n-butylthio, i-Butoxy-i-butylthio-(thiono)phosphorsäureester-chlorid bzw. -bromid;

Methylthio-, Ethylthio-, n-Propylthio-, i-Propylthio-, n-Butylthio-, i-Butylthio-, sec.Butylthio-, tert.Butylthio-phenyl(thiono)phosphonsäureester-chlorid bzw. -bromid;

Die Verbindungen der Formel (III) sind bekannt und/oder können nach allgemein bekannten Verfahren und Methoden hergestellt werden (vgl. z.B. Methoden der organischen Chemie (Houben-Weyl-Müller), 4. Aufl., Band 12/1 (1963), S. 415-420 und S. 560-563; Band 12/2 (1964), S. 274-292, S. 405-408 und S. 607-618, S. 621-622 und S. 755-757; Thieme-Verlag Stuttgart).

Das erfindungemäße Verfahren zur Herstellung der neuen substituierten Oximether der Formel (I) wird bevorzugt unter Verwendung von Verdünnungsmitteln durchgeführt. Als Verdünnungsmittel kommen praktisch alle inerten organischen Lösungsmittel infrage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl- und Dibutylether, Glycoldimethylether und Diglycoldimethylether, Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid

und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -ethylat, ferner aliphatische, aromatische oder heterocyclische Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen 0 und 100°C durchgeführt. Bevorzugt wird der Bereich zwischen 20 und 80°C. Die Umsetzungen werden im allgemeinen bei Normaldruck durchgeführt.

Zur Durchführung des erfindungsgemäßen Verfahrens setzt man auf 1 Mol Phenol der Formel (II) bzw. dessen Ammonium-, Alkali- und Erdalkalimetallsalze 0,8 bis 1,5 Mol vorzugsweise 0,9 bis 1,2 Mol Halogenid der Formel (III) ein.

Die Umsetzung wird im allgemeinen in einem geeigneten Verdünnungsmittel und gegebenenfalls in Gegenwart eines Säureakzeptors durchgeführt. Die Aufarbeitung geschieht nach üblichen Methoden. Die neuen Verbindungen fallen zum Teil in Form von Oelen an, die sich zum Teil nicht unzersetzt destillieren lassen, jedoch durch sogenanntes 'Andestillieren', d.h. längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.

0115828

Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe eignen sich auch zur Bekämpfung von Ekto- und Endoparasiten auf dem Gebiet der Tierhaltung und Viehzucht, wobei durch die Bekämpfung der Schädlinge bessere Ergebnisse, z.B. höhere Milchleistungen, höheres Gewicht, längere Lebensdauer usw. erreicht werden können.

Die Anwendung der erfindungsgemäßen Wirkstoffe geschieht auf diesen Gebieten in bekannter Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff

und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Das erfindungsgemäße Verfahren soll durch die folgenden Herstellungsbeispiele erläutert werden:

Beispiel 1 :

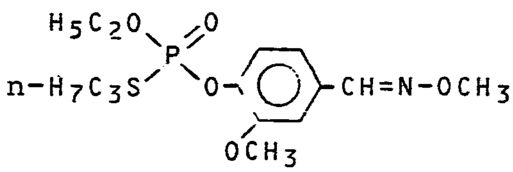

4,5 g (0,025 Mol) 4-Hydroxy-3-methoxy-butaldoxim-O-methylether werden in 100 ml Acetonitril gelöst und zu 4,6 g Kaliumcarbonat gegeben. Anschließend tropft man bei 20°C 5 g (0,023 Mol) O-Ethyl-S-n-propyl-thiophosphorsäureesterchlorid zu dieser Suspension.

Man rührt 6 Stunden zwischen 40°C und 60°C, filtriert unlösliche Bestandteile ab und entfernt das Acetonitril im Wasserstrahlvakuum. Anschließend wird in Methylenchlorid aufgenommen, zunächst alkalisch , dann neutral mit Wasser gewaschen und über Natriumsulfat getrocknet.

Nach Abdestillieren des Lösungsmittels im Wasserstrahlvakuum wird der Rückstand durch 'Andestillieren' bei 1 mbar von Lösungsmittelrückständen befreit.

Man erhält 5,8 g (67 % der Theorie) O-Ethyl-S-n-propyl-O-(2-methoxy-4-O-methylbenzaldoxim)-thiophosphorsäureester vom Brechungsindex $n_D^{20}$ : 1,5469.

Analog Beispiel 1 werden die folgenden Verbindungen der Formel (I)

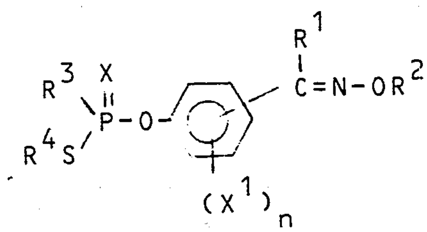

(I)

erhalten:

Tabelle 2 :

| Beisp.-Nr. | X | $(X^1)_n$ | $-\overset{R^1}{\overset{\vert}{C}}=NOR^2$ | $R^3$ | $R^4$ | Brechungsindex $n_D^{20}$ : |
|---|---|---|---|---|---|---|
| 2 | S | - | $4-CH=NOCH_3$ | $-C_2H_5$ | $-CH(CH_3)$<br>$\vert$<br>$C_2H_5$ | 1,5753 |
| 3 | S | - | $4-C(CH_3)=NOCH_3$ | $-C_2H_5$ | $-CH(CH_3)$<br>$\vert$<br>$C_2H_5$ | 1,5720 |
| 4 | O | - | $4-C(CH_3)=NOCH_3$ | $-OC_2H_5$ | $n-C_3H_7$ | 1,5300 |
| 5 | S | - | $4-C(CH_3)=NOCH_3$ | $-OC_2H_5$ | $n-C_3H_7$ | 1,5625 |
| 6 | O | - | $4-CH=NOCH_3$ | $-OC_2H_5$ | $n-C_3H_7$ | 1,5435 |
| 7 | S | - | $4-CH=NOCH_3$ | $-OC_2H_5$ | $n-C_3H_7$ | 1,5683 |
| 8 | O | - | $4-CH=NOCH_3$ | $-C_2H_5$ | $n-C_3H_7$ | 1,5500 |
| 9 | O | - | $4-CH=NOCH_3$ | $-C_2H_5$ | $-CH(CH_3)$<br>$\vert$<br>$C_2H_5$ | 1,5469 |
| 10 | O | - | $3-CH=NOCH_3$ | $-OC_2H_5$ | $n-C_3H_7$ | 1,4736 |
| 11 | O | - | $2-CH=NOCH_3$ | $-OC_2H_5$ | $n-C_3H_7$ | 1,5380 |
| 12 | O | $4,6-Cl_2$ | $2-CH=NOCH_3$ | $-OC_2H_5$ | $n-C_3H_7$ | 1,5331 |
| 13 | O | $4-Cl$ | $2-CH=NOCH_3$ | $-OC_2H_5$ | $n-C_3H_7$ | 1,5472 |

Tabelle 2 : (Forts.)

| Beisp.-Nr. | X | $(X^1)_n$ | $-\overset{R^1}{\overset{\vert}{C}}=NOR^2$ | $R^3$ | $R^4$ | Brechungsindex $n_D^{20}$ : |
|---|---|---|---|---|---|---|
| 14 | O | $4-OCF_3$ | $2-CH=NOCH_3$ | $-OC_2H_5$ | $n-C_3H_7$ | 1,4910 |
| 15 | S | $4-OCF_3$ | $2-CH=NOCH_3$ | $-C_2H_5$ | $-CH(CH_3)$<br>$\vert$<br>$C_2H_5$ | 1,5294 |
| 16 | S | $2-OCH_3$ | $4-CH=NOCH_3$ | $-C_2H_5$ | $-CH(CH_3)$<br>$\vert$<br>$C_2H_5$ | 1,5802 |
| 17 | S | $4-SCF_3$ | $2-CH=NOCH_3$ | $-OC_2H_5$ | $n-C_3H_7$ | 1,5382 |
| 18 | O | $2-NO_2$ | $4-CH=NOCH_3$ | $-C_2H_5O$ | $n-C_3H_7$ | 1,5435 |
| 19 | O | $4-NO_2$ | $3-CH=NOCH_3$ | $-C_2H_5O$ | $n-C_3H_7$ | 1,5492 |
| 20 | O | $4-CF_3$ | $2-CH=NOCH_3$ | $-C_2H_5O$ | $n-C_3H_7$ | 1,5016 |
| 21 | O | 4-Br | $2-CH=NOCH_3$ | $-C_2H_5O$ | $n-C_3H_7$ | 1,5572 |
| 22 | O | 4-F | $2-CH=NOCH_3$ | $-C_2H_5O$ | $n-C_3H_7$ | 1,5289 |

Die Herstellung einiger erfindungsgemäß zu verwendenden Vorprodukte (sowie deren Vorprodukte) soll anhand der folgenden Beispiele erläutert werden:

Beispiel (a)

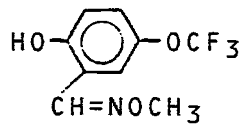

17,8 g (0,070 Mol) 2-Hydroxy-5-trifluormethoxy-benzaldehyd werden in 100 ml Ethanol gelöst und bei 20°C mit 8,4 g (0,1 Mol) O-Methyl-hydroxylaminhydrochlorid versetzt. Anschließend werden 11 g (0,1 Mol) Triethylamin langsam zugetropft.

Die Lösung erwärmt sich auf etwa 45°C. Man rührt 8 Stunden bei 20°C, destilliert Ethanol im Wasserstrahlvakuum ab und nimmt den Rückstand in 150 ml Methylenchlorid auf. Man wäscht 2 mal mit 20 ml Wasser, trocknet die organische Phase mit Natriumsulfat und entfernt das Lösungsmittel im Wasserstrahlvakuum.

Nach Rektifizierung erhält man 2-Hydroxy-5-trifluormethoxy-benzaldoxim-O-methylether mit einem Siedepunkt von $Kp_{0,15}$: 66°C bis 69°C.

Analog Beispiel (a) können die folgenden teilweise neuen Verbindungen der Formel (II)

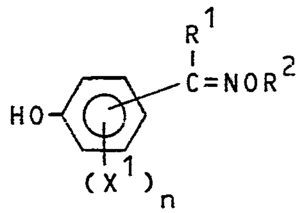

(II)

hergestellt werden.

Tabelle 3 :

| Beisp.-Nr. | $(X^1)_n$ | $-\overset{R^1}{\overset{\mid}{C}}=NOR^2$ | Physikalische Daten |
|---|---|---|---|
| b | -- | $4-CH=NOCH_3$ | $Kp._{0,5}$ 123-127°C |
| c | -- | $4-C(CH_3)=NOCH_3$ | |
| d | -- | $3-CH=NOCH_3$ | $Kp._{0,5}$ 117°C |
| e | -- | $2-CH=NOCH_3$ | |
| f | 2,4-$Cl_2$ | $2-CH=NOCH_3$ | Fp. 134°C |
| g | 4-Cl | $2-CH=NOCH_3$ | |
| h | 2-$OCH_3$ | $4-CH=NOCH_3$ | $Kp._{0,2}$ 110°C |
| i | 4-$SCF_3$ | $2-CH=NOCH_3$ | Fp. 59°C |
| j | 4-$CF_3$ | $2-CH=NOCH_3$ | Fp. 68°C |
| k | 4-Br | $2-CH=NOCH_3$ | Fp. 73-75°C |
| l | 4-F | $2-CH=NOCH_3$ | $Kp._{0,2}$ 83°C |
| m | 4-$NO_2$ | $3-CH=NOCH_3$ | Fp. 71-73°C |
| n | 2-$NO_2$ | $4-CH=NOCH_3$ | Fp. 76-78°C |

Druck in mbar.

0115828

Vorprodukte zu einigen vorstehend beschriebenen Vorprodukten

Beispiel (A)

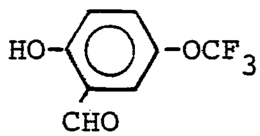

178 g (1Mol) 4-Trifluormethoxyphenol und 140 g (1Mol) Urotropin werden in einem $V_4$ A Rührautoklaven unter Kühlung (-5°C) mit 500 ml HF versetzt. Die Apparate sind druckdicht verschlossen und für 5 Stunden auf 80°C erwärmt, wobei sich ein Druck von 6-7 bar einstellt. Anschließend wird auf 25°C abgekühlt und das Reaktionsgemisch in 1 Liter Wasser eingerührt. Die organische Phase wird abgetrennt und die wäßrige Phase mit Methylenchlorid extrahiert. Die gewaschenen vereinigten organischen Phasen werden destilliert. 84 g 2-Hydroxy-5-Trifluormethoxybenzaldehyd ($Kp_{20mbar}$ 83-84°C) werden erhalten.

Beispiel (B)

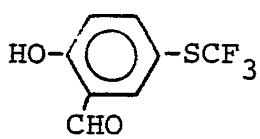

Analog Beispiel (A) werden 194 g (1Mol) 4-Trifluormethylthiophenol eingesetzt. Nach der Reaktion liefert die Destillation 44 g 2-Hydroxy-5-Trifluormethylthiobenzaldehyd ($Kp_{20mbar}$ 105-107°C; Fp. 50-52°C).

Die biologische Wirksamkeit der erfindungsgemäßen Verbindungen soll anhand der folgenden Beispiele erläutert werden:

Beispiel (A)

Myzus-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden; 0 % bedeutet, daß keine Blattläuse abgetötet wurden.

Bei diesem Test zeigten z.B. bei einer Wirkstoffkonzentration von 0,01 % die Verbindungen der Herstellungsbeispiele (1) bis (10) (13), (14) und (20) nach einem Tag eine Abtötung von 100 %.

0115828

**Beispiel (B)**

**Tetranychus-Test (resistent)**

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigten z.B. bei einer Wirkstoffkonzentration von 0,1 % die Verbindungen der Herstellungsbeispiele (4), (6) und (8) bis (14) nach 2 Tagen eine Abtötung von 100 %.

Beispiel (C)

Grenzkonzentrations-Test / Bodeninsekten

| | | | |
|---|---|---|---|
| Testinsekt: | Phorbia antiqua-Maden | | (im Boden) |
| Lösungsmittel: | 3 | Gewichtsteile | Aceton |
| Emulgator: | 1 | Gewichtsteil | Alkylarylpolyglykoläther |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm ( = mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigen z.B. bei einer Wirkstoffkonzentration von 5 ppm die Verbindungen der Herstellungsbeispiele (14), (15) und (16) eine Abtötung von 100 %.

Beispiel

Grenzkonzentrations-Test / Nematoden

Testnematode: Pratylenchus penetrans
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigen z.B. bei einer Wirkstoffkonzentration von 10 ppm die Verbindungen der Herstellungsbeispiele (4), (5), (6), (7) und (9) eine Abtötung von 100 %.

Beispiel E

Test mit Boophilus microplus resistent

Lösungsmittel: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Lösungsmittel-Gemisches und verdünnt das so erhaltene Konzentrat mit Wasser auf die gewünschte Konzentration.

10 adulte Boophilus microplus res. werden in die zu testende Wirkstoffzubereitung 1 Minute getaucht. Nach Überführung in Plastikbecher und Aufbewahrung in einem klimatisierten Raum wird der Abtötungsgrad bestimmt.

Bei diesem Test zeigt z.B. bei einer Wirkstoffkonzentration von 1.000 ppm die Verbindung des Herstellungsbeispiels (6) eine 100 %-ige Abtötung.

Patentansprüche

1. Substituierte Oximether der allgemeinen Formel (I)

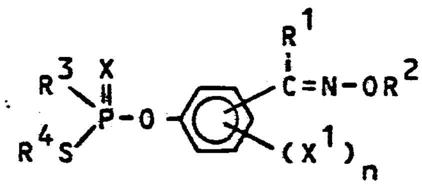

(I)

in welcher

X für Sauerstoff oder Schwefel steht,

$X_1$ für Halogen, Nitro, Cyano, Alkyl, Alkoxy, Alkylthio, Halogenalkyl, Halogenalkoxy und/oder Halogenalkylthio steht,

$R^1$ für Wasserstoff oder Alkyl steht,

$R^2$ für Alkyl steht,

$R^3$ für Alkyl, Alkoxy oder Aryl steht,

$R^4$ für Alkyl steht und

n für 0, 1 oder 2 steht.

2. Substituierte Oximether der allgemeinen Formel (I). gemäß Anspruch 1, in welcher

$R^1$ für Wasserstoff oder Alkyl mit 1 bis 4 Kohlenstoffatomen steht,

$R^2$ für Alkyl mit 1 bis 4 Kohlenstoffatomen steht,

$R^3$ für Alkyl mit 1 bis 4 Kohlenstoffatomen, Alkoxy mit 1 bis 4 Kohlenstoffatomen oder Phenyl steht,

$R^4$ für Alkyl mit 1 bis 6 Kohlenstoffatomen (insbesondere mit 1 bis 4 Kohlenstoffatomen) steht,

X für Sauerstoff oder Schwefel steht,

$X^1$ gleich oder verschieden sein kann und für Halogen, Cyano, Nitro, Alkyl mit 1 bis 4 Kohlenstoffatomen, Alkoxy mit 1 bis 4 Kohlenstoffatomen, Alkylthio mit 1 bis 4 Kohlenstoffatomen, Halogenalkyl mit 1 bis 4 Kohlenstoffatomen und 1 bis 5 Halogenatomen oder Reste aus der Reihe Halogenalkoxy und Halogenalkylthio mit 1 bis 4 Kohlenstoffatomen und 1 bis 5 Halogenatomen (insbesondere Trifluormethyl, Trichlormethyl, Dichlorfluormethyl, Chlordifluormethyl, Difluormethyl, Trifluorethyl, Trichlorethyl, Dichlorfluorethyl, Chlordifluorethyl, Difluorethyl, Trifluormethoxy, Trichlormethoxy, Dichlorfluormethoxy, Chlordifluormethoxy, Difluormethoxy, Trifluorethoxy, Trichlorethoxy, Dichlorfluorethoxy, Chlordifluorethoxy, Difluorethoxy, Trifluormethylthio, Trichlormethylthio, Dichlorfluormethylthio, Chlordifluormethylthio, Difluormethylthio, Trifluorethylthio, Trichlorethylthio, Dichlorfluorethylthio, Chlordifluorethylthio und Difluorethylthio) steht und

n für 0, 1 oder 2, vorzugsweise 0 oder 1 steht.

3. Substituierte Oximether der allgemeinen Formel (I), gemäß Anspruch 1, in welcher

$R^1$ für Wasserstoff, Methyl oder Ethyl steht,

$R^2$ für Methyl oder Ethyl steht,

$R^3$ für Methyl, Ethyl, Methoxy oder Ethoxy steht,

$R^4$ für n-Propyl, i-Propyl, n-Butyl, i-Butyl oder sec-Butyl steht,

X für Sauerstoff oder Schwefel steht,

$X^1$ gleich oder verschieden sein kann und für Fluor, Chlor, Brom, Nitro, Methyl, Ethyl, Methoxy, Ethoxy, Trifluormethyl, Trifluormethoxy oder Trifluormethylthio steht und

n für 0, 1 oder 2 steht.

4. Substituierte Oximether der allgemeinen Formel (I), gemäß Anspruch 1, in welcher

$R^1$ für Wasserstoff oder Methyl steht,

$R^2$ für Methyl steht,

$R^3$ für Ethyl oder Ethoxy steht,

$R^4$ für n-Propyl oder sec-Butyl steht,

X für Sauerstoff oder Schwefel steht,

$X^1$ für Fluor, Brom, Chlor, Methoxy, Trifluormethoxy und/oder Trifluormethylthio steht und

n für 0, 1 oder 2 steht.

5. Substituierte Oximether der allgemeinen Formel (I), gemäß Anspruch 1, in welcher n für 0 steht oder n für 1 oder 2 steht und $X^1$ sich in 2 und/oder 4 Stellung des Phenylringes befindet.

6. Verfahren zur Herstellung von substituierten Oximether der allgemeinen Formel (I)

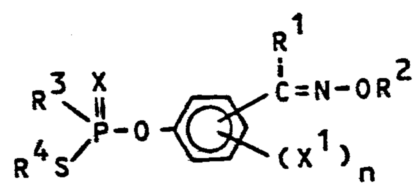

(I)

in welcher

X für Sauerstoff oder Schwefel steht,
$X^1$ für Halogen, Nitro, Cyano, Alkyl, Alkoxy, Alkylthio, Halogenalkyl, Halogenalkoxy und/oder Halogenalkylthio steht,
$R^1$ für Wasserstoff oder Alkyl steht,
$R^2$ für Alkyl steht,
$R^3$ für Alkyl, Alkoxy oder Aryl steht,
$R^4$ für Alkyl steht und
n für 0, 1 oder 2 steht,

dadurch gekennzeichnet, daß man Phenole der allgemeinen Formel (II)

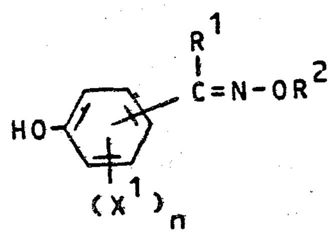

(II)

in welcher

$X^1$, $R^1$, $R^2$ und n die oben angegebene Bedeutung haben, oder deren Alkalimetall-, Erdalkalimetall- oder Ammoniumsalze mit Halogeniden der allgemeinen Formel (III)

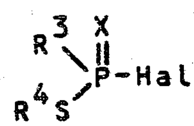

(III)

in welcher

$R^3$, $R^4$ und X die oben angegebene Bedeutung haben, und

Hal für Halogen (vorzugsweise Chlor oder Brom ) steht,

gegebenenfalls in Gegenwart eines Säureakzeptors und gegegebenenfalls unter Verwendung eines Verdünnungsmittels umsetzt.

7. Schädlingsbekämpfungsmittel, gekennzeichnet durch einen Gehalt an mindestens einer Verbindung der allgemeinen Formel I gemäß den Ansprüchen 1 oder 6.

8. Verwendung von Verbindungen der allgemeinen Formel I gemäß den Ansprüchen 1 oder 6 zur Bekämpfung von Schädlingen, insbesondere von Arthropoden (wie Insekten und Spinnentieren) und von Nematoden.

9. Verfahren zur Bekämpfung von Schädlingen, dadurch gekennzeichnet, daß man Verbindungen der allgemeinen Formel I gemäß den Ansprüchen 1 oder 6 auf die Schädlinge, vorzugsweise Arthropoden (wie Insekten oder Spinnentieren) oder Nematoden. ihren Lebensraum einwirken läßt.

10. Verfahren zur Herstellung von Schädlingsbekämpfungsmitteln, dadurch gekennzeichnet, daß man Verbindungen der allgemeinen Formel I gemäß den Ansprüchen 1 oder 6 mit Streckmitteln und/oder oberflächenaktiven Mitteln vermischt.

0115828

Europäisches Patentamt

# EUROPÄISCHER RECHERCHENBERICHT

Nummer der Anmeldung

EP 84 10 0853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | DE-A-1 936 750 (C.H. BOEHRINGER SOHN)<br>* Ansprüche * | 1,6-10 | C 07 F 9/18<br>C 07 F 9/40<br>A 01 N 57/14<br>A 01 N 57/22 |
| Y | FR-A-2 239 477 (SUMITOMO CHEMICAL COMPANY)<br>* Ansprüche * | 1,6-10 | |
| D,Y | DE-A-2 163 391 (FARBENFABRIKEN BAYER)<br>* Ansprüche * | 1,6-10 | |

RECHERCHIERTE SACHGEBIETE (Int. Cl. 3)

C 07 F 9/00

Der vorliegende Recherchenbericht wurde für alle Patentansprüche erstellt.

| Recherchenort | Abschlußdatum der Recherche | Prüfer |
|---|---|---|
| DEN HAAG | 11-05-1984 | BESLIER L.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82